# FASCICULE DE BREVET EUROPEEN

(11) **EP 1 612 812 B1**
(45) Date de publication et mention de la délivrance du brevet: **29.08.2007**
(21) Numéro de dépôt: 05300493.3
(22) Date de dépôt: 20.06.2005
(51) Int. Cl.: H01F 7/16, H02K 33/12

(54) **Actionneur linéaire à prise directe**
Linear Betätiger mit direktem Antrieb
Direct drive linear actuator

(30) Priorité: 29.06.2004 FR 0407137
(43) Date de publication de la demande: 04.01.2006
(73) Titulaire: Renault SAS, 92100 Boulogne Billancourt (FR)
(72) Inventeur: MACUA, Eugenio, 31008, PAMPLONA (ES); RIPOLL, Christophe, 78220, VIROFLAY (FR); VANNIER, Jean-Claude, 92240, MALAKOFF (FR)
(74) Mandataire: Rougemont, Bernard

(56) Documents cités:
- FR-A- 1 431 209
- FR-A- 2 829 551
- US-A- 2 628 319
- US-A- 3 460 081
- US-A- 4 845 392

## Description

L'invention concerne un actionneur linéaire à prise directe dont la partie mobile est en matériau ferromagnétique et dont la partie fixe contient deux bobines conductrices et plusieurs aimants permanents.

Un tel actionneur linéaire est destiné à être utilisé pour l'électrification de différents organes du véhicule automobile, en particulier la boîte de vitesses ou le dispositif d'actionnement des soupapes d'un moteur thermique.

Actuellement, il existe des actionneurs linéaires à prise directe et à aimants permanents, dont la partie mobile est réalisée notamment par des aimants permanents ou par des bobines conductrices.

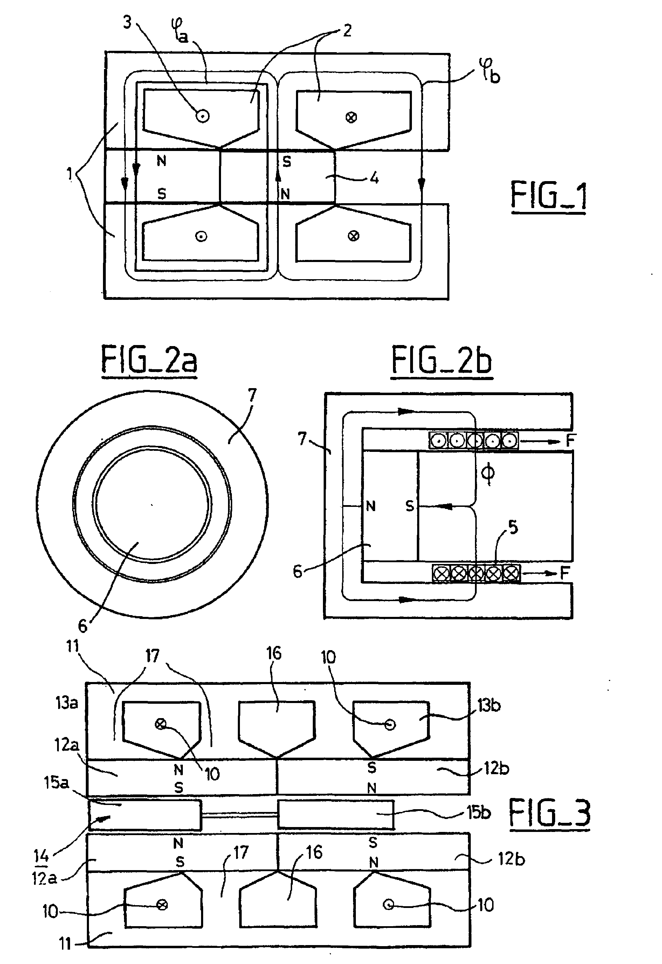

La demande de brevet français publiée sous le No. 2 829 551, au nom de RENAULT, concerne un actionneur linéaire à prise directe dont la partie mobile est composée de deux aimants permanents qui se déplacent linéairement entre deux bobines conductrices placées dans un châssis, comme le montre la figure 1. Ce châssis fixe 1 est en matériau ferromagnétique, constitué de deux parties parallèles, percées chacune de deux ouvertures 2 dans lesquelles est bobiné un fil conducteur 3. Les deux conducteurs réalisent deux bobines parallèles qui sont alimentées par deux courants électriques circulant dans le même sens. Entre ces deux parties fixes sont disposés deux aimants permanents 4, se déplaçant le long d'un guide sous l'effet du flux magnétique φ_{b} créé par le courant électrique parcourant les bobines 3. Lorsque le flux φₐ créé par les aimants est de sens contraire à celui φ_{b} créé par les bobines, les aimants sont en position instable et vont se déplacer vers la position stable où les deux flux φₐ et φ_{b} sont de même sens. Un tel actionneur pourrait être utilisé pour la sélection de ligne dans une boîte de vitesse robotisée.

Les figures 2a et 2b, qui sont des vues en coupe axiale, respectivement radiale, représentent schématiquement un autre type d'actionneur linéaire à prise directe dont la partie mobile est constituée de fils conducteurs 5 et dont la partie fixe 7 contient des aimants permanents 6. Le principal inconvénient tient au fait qu'il faut alimenter électriquement une bobine mobile afin de contrôler la force F développée par le moteur sous l'effet du flux Φ crée par les aimants.

Dans ces deux types d'actionneurs linéaires, la partie mobile est complexe à réaliser et son poids est difficile à réduire car, dans le cas des aimants mobiles, ils doivent avoir une épaisseur suffisante pour éviter leur démagnétisation, et dans le cas des bobines mobiles, il faut un nombre suffisant de conducteurs pour produire la force souhaitée.

De plus, dans l'actionneur à aimants mobiles, la partie mobile doit assurer le maintien et le guidage des aimants qui sont des facteurs de surdimensionnement en poids et en volume de cette partie. Dans le cas de l'actionneur à bobines mobiles, il faut assurer leur alimentation et leur rigidité. Un inconvénient supplémentaire réside dans l'évacuation de la chaleur des conducteurs électriques.

Par la publication FR 1 431 209, on connaît un actionneur linéaire à prise directe comprenant une partie mobile destinée à se déplacer linéairement à l'intérieur d'une partie fixe, qui comprend, d'une part, au moins deux bobines de fils conducteurs alimentés par un courant électrique, logées dans un châssis métallique conçu pour canaliser le flux magnétique généré par les bobines, et d'autre part au moins deux aimants de même dimensions ; et qui comporte un espace central dans lequel se déplace la partie mobile qui est constituée de deux pièces distinctes, solidaires, en matériau ferromagnétique, sous l'action de la commutation des flux induits par les bobines par rapport aux flux induits par les aimants.

Dans un tel actionneur, la partie mobile est complexe et lourde.

La présente invention vise à réaliser un actionneur linéaire selon l'état de la technique ayant une partie mobile simple sans aimants permanents et par conséquence très légère.

Dans ce but, elle propose un actionneur linéaire à prise directe comprenant une partie mobile destinée à se déplacer linéairement à l'intérieur d'une partie fixe, qui comprend d'une part au moins deux bobines de fils conducteurs alimentés par un courant électrique, logées dans un châssis métallique conçu pour canaliser le flux magnétique généré par les bobines, et d'autre part au moins deux aimants consécutifs, de même dimensions et de polarités contraires, et qui comporte un espace central dans lequel se déplace la partie mobile qui est constituée de deux pièces distinctes, solidaires, en matériau ferromagnétique, sous l'action de la commutation des flux induits par les bobines par rapport aux flux induits par les aimants, ladite partie fixe étant réalisée à partir de deux châssis creusés chacun par au moins un couple de cavités parallèles à travers lesquelles est enroulé le fil conducteur d'une bobine et à partir de deux couples d'aimants, de mêmes dimensions et de polarités contraires, associés chacun à un châssis, les deux pièces ferromagnétiques de la partie mobile étant dimensionnées et disposées l'une par rapport à l'autre de sorte que chaque pièce se déplace entre deux aimants de deux châssis parallèles, placés en vis-à-vis, pour que le flux magnétique généré par chaque aimant passe par l'aimant voisin du même châssis, de polarité contraire, et suive le même trajet par les deux pièces ferromagnétiques que le flux magnétique généré par les deux bobines dans le même sens ou dans le sens contraire.

Pour cela, un premier objet de l'invention est un actionneur linéaire à prise directe, comprenant une partie mobile destinée à se déplacer linéairement à l'intérieur d'une partie fixe, caractérisé en ce que ladite partie fixe comprend d'une part au moins deux bobines de fils conducteurs alimentés par un courant électrique, logées dans un châssis métallique conçu pour canaliser le flux magnétique généré par les bobines, et d'autre part au moins deux aimants consécutifs, de même dimensions et de polarités contraires, et en ce que la partie fixe comporte un espace central dans lequel se déplace la partie mobile qui est constituée de deux pièces distinctes, solidaires, en matériau ferromagnétique, sous l'action de la commutation des flux induits par les bobines par rapport aux flux induits par les courants.

Selon une autre caractéristique de l'actionneur linéaire, la partie fixe est réalisée à partir de deux châssis parallélépipédiques creusés chacun par au moins un couple de cavités parallèles à travers lesquelles est enroulé le fil conducteur d'une bobine et à partir de deux groupes de deux aimants de mêmes dimensions et de polarités contraires, associés chacun à un châssis et en ce que les deux pièces ferromagnétiques de la partie mobile soient dimensionnées et disposées l'une par rapport à l'autre de sorte que chaque pièce se déplace entre deux aimants de deux châssis parallèles, placés en vis-à-vis, pour que le flux magnétique généré par chaque aimant passe par l'aimant voisin du même châssis, de polarité contraire, et suive le même trajet par les deux pièces ferromagnétiques que le flux magnétique généré par les deux bobines dans le même sens ou dans le sens contraire.

Selon une autre caractéristique de l'actionneur linéaire, la partie fixe est réalisée à partir d'un châssis cylindrique creux métallique, creusé par au moins un couple de cavités circulaires parallèles, de même diamètre, dans chacune desquelles est réalisée une bobine magnétique et à partir d'au moins deux aimants circulaires, de polarités contraires et de même diamètre, situés sur la paroi interne du châssis, côte à côte, au centre desquels se déplace la partie mobile dont les deux pièces, de forme cylindrique et de diamètre inférieur au diamètre intérieur des aimants, ont une longueur inférieure à la longueur de chaque courant.

Un second objet de l'invention est un procédé de fonctionnement d'un actionneur linéaire à prise directe selon les caractéristiques précédentes, caractérisé en ce qu'il est commandé par le sens du courant dans les deux bobines, de sorte que la partie mobile glisse d'une position extrême instable, définie quand le flux magnétique créé par les aimants est contraire au flux magnétique créé par le courant circulant dans les conducteurs, vers une autre position extrême stable, définie quand le flux créé par les aimants est dans le même sens que celui créé par les conducteurs.

D'autres caractéristiques et avantages de l'invention apparaîtront à la lecture de la description de plusieurs exemples de réalisation, illustrée par les figures suivantes qui sont, outre les figures 1, 2a et 2b déjà décrites :
- la figure 3 : une coupe transversale schématique d'un premier exemple de réalisation d'un actionneur linéaire selon l'invention ;
- les figures 4a à 4d : les trajets des flux magnétiques créés par les aimants et par les bobines dans les différentes positions de la partie mobile ;
- les figures 5a et 5b : une coupe transversale et une coupe radiale d'un deuxième exemple de réalisation d'un actionneur linéaire selon l'invention ;
- la figure 6 : une coupe transversale schématique d'un troisième exemple de réalisation d'un actionneur linéaire selon l'invention ;
- les figures 7a à 7d : les trajets des flux générés par les aimants, respectivement par les bobines, dans les différentes positions de la partie mobile de l'actionneur.

Les éléments portant les mêmes références dans les différentes figures remplissent les mêmes fonctions en vue des mêmes résultats.

L'actionneur linéaire à prise directe selon l'invention comprend une partie mobile se déplaçant linéairement à l'intérieur d'une partie fixe comprenant, dans le premier exemple de réalisation représenté sur la figure 3, d'une part deux bobines 10 de fil conducteur logées chacune dans un châssis métallique parallélépipédique 11, et d'autre part deux couples d'aimants 12ₐ et 12_{b} de polarités contraires. Dans l'exemple de la figure 3, les châssis sont parallélépipédiques avec deux cavités 13ₐ et 13_{b} parallèles, à travers lesquelles sont enroulés les fils conducteurs des deux bobines 10. Les deux châssis 11 sont symétriques par rapport au plan de déplacement de la partie mobile 14. Les deux aimants 12ₐ et 12_{b} de chaque couple associé à une bobine sont placés chacun sous une cavité de passage des fils conducteurs.

La partie mobile 14 de l'actionneur linéaire est destinée à se déplacer dans l'espace séparant les deux châssis placés en vis-à-vis, et est constituée de deux pièces 15ₐ et 15_{b} distinctes, solidaires, en matériau ferromagnétique, permettant le passage du flux magnétique à travers elles. Les deux pièces 15ₐ et 15_{b} sont dimensionnées et disposées l'une par rapport à l'autre de sorte que chacune d'elles se déplace entre deux aimants 12ₐ, respectivement 12_{b} , de deux châssis 11 différents en vis-à-vis, d'un bord à l'autre du même aimant 12ₐ ou 12_{b}.

Les figures 4a à 4d représentent les trajets du flux magnétique ϕₐ créé par les aimants dans les deux positions extrêmes de déplacement de la partie mobile ainsi que le flux ϕ_{b} généré par les deux bobines selon le sens de circulation du courant électrique qui les parcourt. Le flux créé par les aimants passe par l'aimant voisin de polarité contraire et traverse successivement les deux pièces 15ₐ et 15_{b} ferromagnétiques pour aboutir dans les aimants en vis-à-vis. Le flux ϕ_{b} généré par les bobines, dont les courants électriques sont obligatoirement de même sens, passe également par les pièces mobiles.

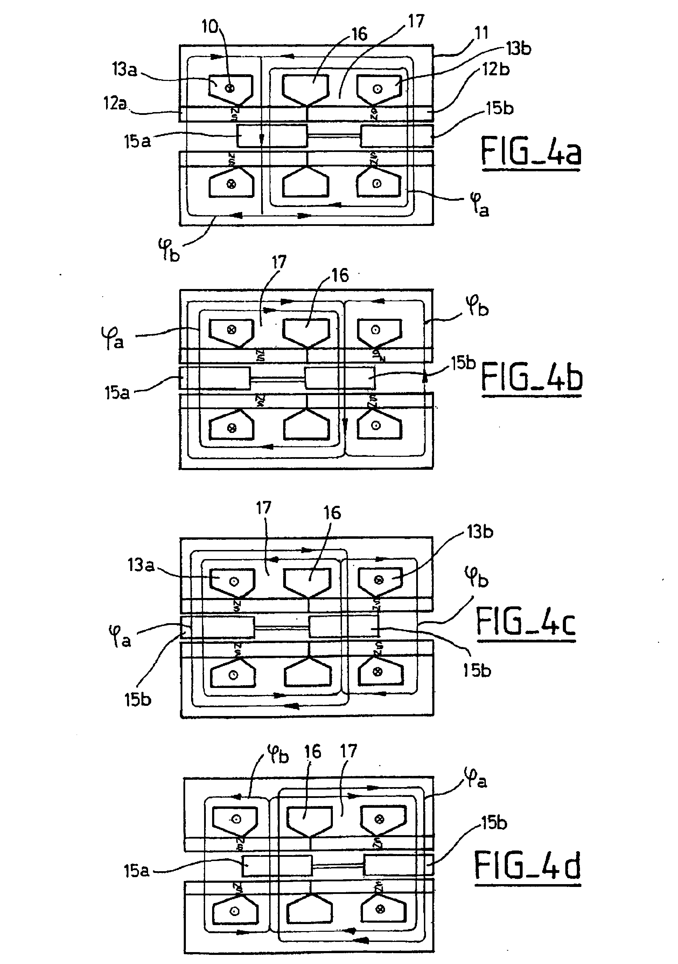

La figure 4a correspond à une position instable de la partie mobile, car le flux ϕ_{b} généré par les deux bobines 10 et passant par les deux pièces mobiles est de sens contraire au flux ϕₐ généré par les aimants12ₐ ou 12_{b}, de sorte que la partie mobile de l'actionneur va tendre vers une position stable, représentée sur la figure 4b où le flux généré par les bobines et passant par les deux pièces mobiles qui se sont déplacées est de même sens que celui créé par les aimants.

Pour provoquer un nouveau déplacement de la partie mobile, le sens du courant dans les deux bobines 10 est inversé et la position précédente devient instable car le flux généré par les bobines a changé de sens (figure 4c). Ainsi, la partie mobile va se déplacer pour se mettre en position stable (figure 4d), les deux flux magnétiques créés par les aimants et les bobines étant de même sens.

Pour que, dans les positions extrêmes de la partie mobile, les flux magnétiques passent au maximum par les deux pièces mobiles, les deux châssis sont percés chacun d'une cavité 16 parallèle aux deux cavités 13ₐ et 13_{b} et placée entre elles, de façon à créer un vide dans lequel les flux ne vont presque pas passer. La forme de cette cavité 16, comme celle des deux cavités 13ₐ et 13_{b} de logement des bobines, présentent une coupe transversale telle que le flux magnétique est canalisé autour des conducteurs d'une part et passe par les pièces mobiles en matériau ferromagnétique d'autre part. Les quatre zones de la partie fixe qui séparent ces trois cavités constituent des pôles 17 à travers chacun desquels le flux créé par une bobine a une direction unique. Dans l'exemple représenté sur la figure 3, la longueur des aimants est égale à la moitié de celle d'un châssis et la longueur d'une pièce mobile est inférieure à celle d'un aimant mais toujours supérieure à la longueur d'un pôle 17.

Les différentes figures montrent la nécessité de placer en vis-à-vis deux couples d'aimants, car le flux généré par chaque aimant se dirige dans l'aimant de polarité contraire, situé à côté de lui.

Dans les positions stables, le flux créé par les bobines est maximal dans le sens du flux créé par les aimants, et quand la partie mobile centrale se déplace, la réluctance vue par les aimants reste constante, ce qui représente une caractéristique importante du moteur. De cette façon, l'évolution de la force qui est proportionnelle au courant ne dépend que de la tension appliquée et elle est indépendante de la partie mobile.

La force développée par l'actionneur linéaire est proportionnelle au courant dans les bobines, qui peuvent être connectées en série ou en parallèle, ce qui permettrait de commander l'actionneur avec une seule bobine.

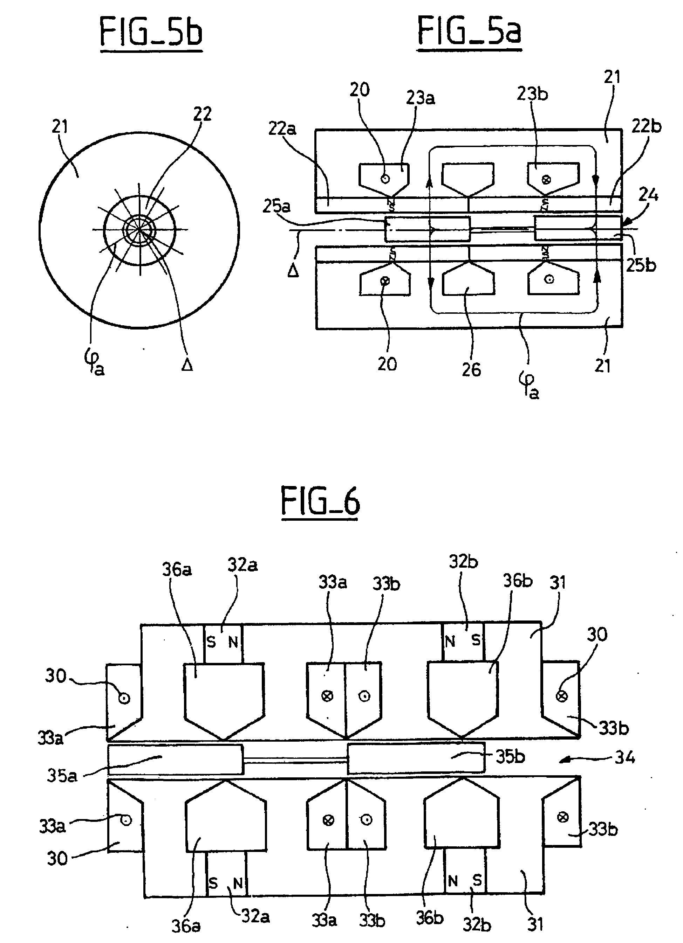

Selon un deuxième exemple de réalisation, l'actionneur linéaire peut être axisymétrique, en particulier de forme cylindrique, comme le montrent les figures 5a et 5b qui sont des vues en coupe axiale, respectivement radiale. Dans ce cas, la partie fixe de l'actionneur est constituée d'un châssis 21 métallique, cylindrique évidé en son centre selon son axe de symétrie Δ, et creusé de deux cavités 23ₐ et 23_{b} en forme d'anneau. A l'intérieur de chaque cavité, deux bobines 20 parallèles, centrées sur l'axe Δ sont réalisées à partir d'un fil conducteur, parcouru par des courants de sens contraire l'un par rapport à l'autre. La partie fixe comprend également deux aimants cylindriques creux 22ₐ et 22_{b} , de polarités contraires, de même diamètre, centrés sur l'axe Δ et mis bout à bout contre la paroi interne du châssis 21. Au milieu de cette partie fixe, le long de l'axe de symétrie Δ, se déplace la partie mobile 24 de l'actionneur, qui est composée de deux cylindres pleins 25ₐ et 25_{b}, en matériau ferromagnétique, de diamètre inférieur à celui des aimants. Comme pour le premier exemple de réalisation, une cavité 26 en forme d'anneau est creusée entre les deux cavités 23ₐ et 23_{b} , parallèlement à elles, de façon à créer un vide dans lequel le flux magnétique φₐ ne passe pas et quatre pôles par lesquels il passe. La longueur de chaque pièce ferromagnétique est inférieure à celle d'un aimant, et peut être égale en particulier à la moitié de celle d'un aimant. Le trajet du flux magnétique est radial comme le montre la figure 5b.

L'avantage d'un actionneur axisymétrique est que la partie mobile peut tourner librement par rapport à la partie fixe. Ce type d'action est très adapté pour réaliser des mouvements combinés à la fois linéaires et rotatifs, en particulier dans les dispositifs de changement de vitesse.

Selon un troisième exemple de réalisation représenté schématiquement en coupe transversale sur la figure 6, l'actionneur linéaire à prise directe comprend une partie mobile 34, constituée de deux pièces 35ₐ et 35_{b} distinctes, solidaires, en matériau ferromagnétique comme décrites pour le premier exemple de réalisation. Cette partie mobile se déplace entre deux châssis métalliques 31 fixes et parallèles, de forme parallélépipédique, creusés chacun par deux couples de cavités 33ₐ et 33_{b} parallèles, à travers chacun desquels est enroulée une bobine 30. Les courants parcourant les deux bobines d'un même châssis sont inversés. La partie fixe comprend également deux couples d'aimants 32ₐ et 32_{b} de polarités contraires et de mêmes dimensions, situés chacun entre deux cavités 33ₐ ou 33_{b} d'une bobine 30. Les aimants sont de plus séparés de la partie mobile de l'actionneur, qui se déplace dans l'espace séparant les deux châssis, par deux cavités 36ₐ et 36_{b}. Chaque bobine entoure une desdites cavités créant un vide entre l'aimant et la partie mobile, dans le but de canaliser le flux magnétique généré par la bobine, créant ainsi quatre pôles 37. La longueur de chaque pièce ferromagnétique de la partie mobile de l'actionneur est supérieure à la longueur d'un pôle définie par la forme des cavités 33ₐ, 33_{b} et 36ₐ par exemple.

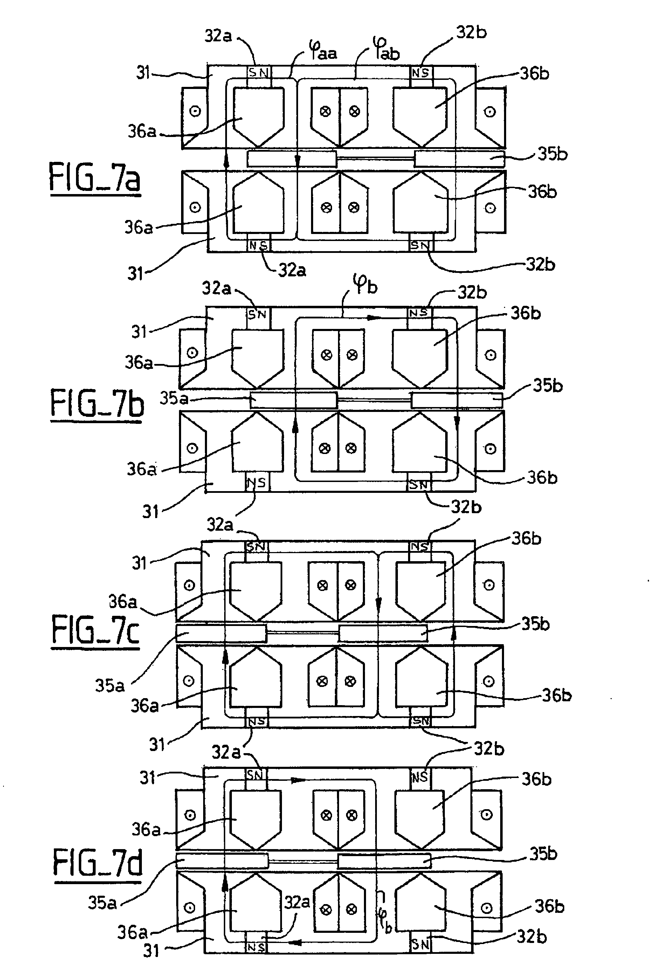

Les figures 7a et 7b représentent les trajets des flux générés par les aimants, respectivement par les bobines, alors que la partie mobile 34 de l'actionneur est en position instable, pour un sens déterminé des courants dans les quatre bobines. Les figures 7c et 7d représentent ces mêmes flux respectifs alors que la partie mobile s'est déplacée vers une position stable, le sens des courants dans les bobines étant resté le même.

Sur la figure 7a, le flux ϕ_{ab} créé par les deux aimants 32_{b} en vis-à-vis, qui sont entourés par les deux pièces mobiles 35ₐ et 35_{b}, sort du Nord de chacun d'eux pour aller vers le Sud de l'autre en passant précisément par ces deux pièces ferromagnétiques et en contournant les cavités centrales 36_{b} des deux châssis 31. Le flux ϕₐₐ créé par l'autre couple d'aimants 32ₐ en vis-à-vis parcourt un trajet plus court, ne passant que par une seule pièce mobile 35ₐ.

Sur la figure 7b, le flux ϕ_{b} généré par les quatre bobines passe également par les deux pièces ferromagnétiques mobiles 35ₐ et 35_{b} mais suivant un sens contraire à celui du flux créé par les aimants 32_{b}, en raison du sens du courant dans les bobines. C'est pourquoi cette position de la partie mobile de l'actionneur est instable et cette dernière va se déplacer vers une position stable, représentée sur les figures 7c et 7d. Sur ces deux figures représentant respectivement les trajets des flux générés par les aimants et par les bobines, on constate que les sens des flux sont les mêmes, passant toujours par les deux pièces de la partie mobile de l'actionneur.

Un autre objet de l'invention est un procédé de fonctionnement d'un actionneur linéaire à prise directe tel que décrit précédemment, qui est commandé par le sens du courant dans les bobines, de sorte que la partie mobile glisse d'une position extrême instable, définie quand le flux magnétique créé par les aimants est contraire au flux magnétique créé par le courant circulant dans les conducteurs des bobines, vers une autre position extrême stable, définie quand le flux créé par les aimants est dans le même sens que celui créé par les conducteurs.

La présente invention présente les avantages suivants par rapport aux actionneurs linéaires actuellement connus :
- la partie mobile de l'actionneur n'ayant ni aimants ni bobines de fils conducteurs est plus légère et plus compacte, donc plus facile à déplacer et son guidage est plus simple à intégrer. De plus, la commande de l'actionneur est plus facile à réaliser que dans le cas des moteurs à bobine mobile ;
- l'évacuation thermique des aimants et de la bobine se fait par le châssis externe de l'actionneur ;
- la fiabilité de l'actionneur est accrue car les aimants et les bobines, sur la partie fixe, reçoivent moins de chocs que dans les réalisations antérieures.

## Revendications

1. Actionneur linéaire à prise directe comprenant une partie mobile (14) destinée à se déplacer linéairement à l'intérieur d'une partie fixe (11), qui comprend d'une part au moins deux bobines de fils conducteurs (10) alimentés par un courant électrique, logées dans un châssis métallique conçu pour canaliser le flux magnétique généré par les bobines, et d'autre part au moins deux aimants consécutifs, de même dimensions et de polarités contraires, et qui comporte un espace central dans lequel se déplace la partie mobile qui est constituée de deux pièces distinctes (15a, 15b), solidaires, en matériau ferromagnétique, sous l'action de la commutation des flux induits par les bobines par rapport aux flux induits par les aimants, ladite partie fixe étant réalisée à partir de deux châssis creusés chacun par au moins un couple de cavités parallèles à travers lesquelles est enroulé le fil conducteur d'une bobine et à partir de deux couples d'aimants, de mêmes dimensions et de polarités contraires, associés chacun à un châssis, les deux pièces ferromagnétiques de la partie mobile étant dimensionnées et disposées l'une par rapport à l'autre de sorte que chaque pièce se déplace entre deux aimants de deux châssis parallèles, placés en vis-à-vis, pour que le flux magnétique généré par chaque aimant passe par l'aimant voisin du même châssis, de polarité contraire, et suive le même trajet par les deux pièces ferromagnétiques que le flux magnétique généré par les deux bobines dans le même sens ou dans le sens contraire.

2. Actionneur linéaire selon la revendication 1, **caractérisé en ce que** la partie fixe est réalisée à partir de deux châssis (11) parallélépipédiques creusés chacun par deux cavités (13) parallèles à travers lesquelles est enroulée une bobine (10) et à partir de deux couples d'aimants (12ₐ, 12_{b}), de même largeur égale à la moitié de la longueur d'un châssis et de polarités contraires côte à côte et en vis-à-vis.

3. Actionneur linéaire selon la revendication 1, **caractérisé en ce que** la partie fixe est réalisée à partir de deux châssis (31) parallélépipédiques creusés chacun par deux couples de cavités (33ₐ et 33_{b}) parallèles à travers chacun desquels est enroulée une bobine (30), les courants circulant dans deux bobines d'un même châssis étant de sens contraire et à partir de deux couples d'aimants (32ₐ, 32_{b}) de même longueur et de polarités contraires, situés chacun entre deux cavités d'une bobine.

4. Actionneur linéaire selon la revendication 1, **caractérisé en ce que** la partie fixe est réalisée à partir d'un châssis (21) cylindrique creux métallique, creusé par au moins deux cavités (23ₐ, 23_{b}) circulaires parallèles, de même diamètre, dans chacune desquelles est réalisée une bobine magnétique (20) et à partir d'au moins deux aimants circulaires (22ₐ, 22_{b}), de polarités contraires et de même diamètre, situés sur la paroi interne du châssis, côte à côte, au centre desquels se déplace la partie mobile dont les deux pièces (25ₐ, 25_{b}), de forme cylindrique et de diamètre inférieur au diamètre intérieur des aimants, ont une longueur inférieure à la longueur de chaque aimant.

5. Actionneur linéaire selon la revendication 4, **caractérisé en ce que** la longueur de chaque pièce ferromagnétique (25ₐ, 25_{b}) de la partie mobile est égale à la moitié de la longueur d'un aimant (22ₐ, 22_{b}) le long duquel elle se déplace, la longueur dudit aimant étant égale à la moitié de celle du châssis (21).

6. Actionneur linéaire selon la revendication 2, **caractérisé en ce que** les deux châssis (11) sont percés chacun d'une cavité (16) parallèle aux deux cavités (13ₐ et 13_{b}) et placée entre elles, de façon à créer un vide dans lequel le flux magnétique ne passe pas, **en ce que** la forme de ladite cavité (16), comme celle des deux cavités (13ₐ et 13_{b}) de logement des bobines, présentent une coupe transversale telle que le flux magnétique est canalisé autour des conducteurs d'une part et passe par les quatre pôles (17) créés et par les pièces mobiles en matériau ferromagnétique d'autre part, et **en ce que** la longueur de chaque pièce ferromagnétique (15ₐ, 15_{b}) de la partie mobile est supérieure à celle d'un pôle (17) à travers lequel passe le flux.

7. Actionneur linéaire selon la revendication 5, **caractérisé en ce que** le châssis (21) est percé d'une cavité (26) parallèle aux deux cavités (23ₐ, 23_{b}) et placée entre elles, de façon à créer un vide dans lequel le flux magnétique ne passe pas et quatre pôles (27) par lesquels il passe, **en ce que** la forme desdites trois cavités (23ₐ, 23_{b} 26) présentent une coupe transversale telle que le flux magnétique est canalisé autour des conducteurs et passe par les quatre pôles (27) ainsi que par les pièces mobiles en matériau ferromagnétique, et **en ce que** la longueur de chaque pièce ferromagnétique (35ₐ, 35_{b}) de la partie mobile est supérieure à celle d'un pôle (37) défini par la forme des cavités.

8. Procédé de fonctionnement d'un actionneur linéaire à prise directe selon l'une des revendications précédentes, **caractérisé en ce qu'**il est commandé par le sens du courant dans les deux bobines, de sorte que la partie mobile glisse d'une position extrême instable, définie quand le flux magnétique créé par les aimants est contraire au flux magnétique créé par le courant circulant dans les conducteurs, vers une autre position extrême stable, définie quand le flux créé par les aimants est dans le même sens que celui créé par les conducteurs.

## Claims

1. Linear actuator with direct drive comprising a moving part (14) intended to be moved linearly within a fixed part (11), which comprises on the one hand at least two coils of conductive wires (10) powered by an electric current, housed in a metal frame designed to channel the magnetic flux generated by the coils, and on the other hand, at last two consecutive magnets, of the same dimensions and of opposite polarities, and which comprises a central space in which moves the moving part which comprises two separate pieces (15a, 15b), joined together, being made of ferromagnetic material, by the action of the switching of the fluxes induced by the coils relative to the fluxes induced by the magnets, said fixed part being produced from two frames, each hollowed by at least one pair of parallel cavities through which is wound the conductive wire of one coil and from two pairs of magnets, of the same dimensions and of opposite polarities, each associated with a. frame, the two ferromagnetic pieces of the moving part being dimensioned and arranged relative to each other so that each piece moves between two magnets of two parallel frames; placed facing each other, for the magnetic flux generated by each magnet to pass through the neighbouring magnet of the same frame, of opposite polarity, and follow the same path through the two ferromagnetic pieces as the magnetic flux generated by the two coils in the same direction or in the opposite direction.

2. Linear actuator according to Claim 1, **characterized in that** the fixed part is made from two parallelepipedal frames (11) each hollowed by two parallel cavities (13) through which is wound a coil (10) and from two pairs of magnets (12ₐ, 1-2_{b}) of the same width equal to half the length of a frame and of opposite polarities side by side and facing each other.

3. Linear actuator according to Claim 1, **characterized in that** the fixed part is made from two parallelepipedal frames (31) each hollowed by two parallel cavities (33ₐ and 33_{b}) through each of which is wound a coil (30), the currents flowing in the two coils of one and the same frame being in opposite directions, and from two pairs of magnets (32ₐ, 32_{b}) of the same length and of opposite polarities, each located between two cavities of a coil.

4. Linear actuator according to Claim 1, **characterized in that** the fixed part is made from a hollow metal cylindrical frame (21), hollowed by at least two parallel circular cavities (23ₐ, 23_{b}), of the same diameter, in each of which is made a magnetic coil (20), and from at least two circular magnets (22ₐ, 22_{b}), of opposite polarities and of the same diameter, located on the internal wall of the frame, side by side, in the centre of which moves the moving part, of which the two pieces (25ₐ, 25_{b}), cylindrical in shape and with a diameter less than the internal diameter of the magnets, have a length less than the length of each magnet.

5. Linear actuator according to Claim 4, **characterized in that** the length, of each ferromagnetic piece (25ₐ, 25_{b}) of the moving part is equal to half the length of a magnet (22ₐ, 22_{b}), along which it moves, the length of said magnet being equal to half that of the frame (21).

6. Linear actuator according to Claim 2, **characterized in that** the two frames (11) are each pierced with a cavity (16) parallel to the two cavities (13ₐ and 13_{b}) and placed between them, so as to create a void into which the magnetic flux does not pass, and **in that** the form of said cavity (16), like that of the two cavities (13ₐ and 13_{b}) housing the coils, has a transverse cross section such that the magnetic flux is channelled around the conductors on the one hand and passes through the.four created poles (17) and.through the moving pieces made of ferromagnetic material on the other hand, and **in that** the length of each ferromagnetic piece (15ₐ, 15_{b}) of the moving part is .greater than that of a pole (17) through which the flux passes.

7. Linear actuator according to Claim 5, **characterized in that** the frame (21) is pierced with a cavity (26) parallel to the two cavities (23ₐ, 23_{b}) and placed between them, so as to create a void into which the magnetic flux does not pass and four poles (27) through which it passes, and **in that** the form of said three cavities (23ₐ, 23_{b} 26) has a transverse cross section such that the magnetic flux is channelled around the conductors and passes through the four poles (27) and through the moving pieces made of ferromagnetic material, and **in that** the length of each ferromagnetic piece (35ₐ, 35_{b}) of the moving part is greater than that of a pole (37) defined by the form of the cavities.

8. Operating method of a linear actuator with direct drive according to one of the preceding claims; **characterized in that** it is controlled by the direction of the current in the two coils, so that the moving part slides from an unstable extreme position defined when the magnetic flux created by the magnets is opposite to the magnetic flux created by the current flowing in the conductors, to another extreme position that is stable, defined when the flux created by the magnets is in the same direction as that created by the conductors.

## Patentansprüche

1. Lineares Betätigungsglied mit Direktantrieb, das einen beweglichen Teil (14) aufweist, der dazu bestimmt ist, sich innerhalb eines ortsfesten Teils (11) linear zu verschieben, das einerseits mindestens zwei Spulen von mit einem elektrischen Strom gespeisten Leiterdrähten (10), die in einen metallischen Rahmen eingesetzt sind, der konzipiert ist, um den von den Spulen erzeugten Magnetfluss zu kanalisieren, und andererseits mindestens zwei aufeinander folgende Magnete gleicher Abmessungen und entgegengesetzter Polaritäten aufweist, und das einen zentralen Raum aufweist, in dem sich der bewegliche Teil, der aus zwei getrennten, fest miteinander verbundenen Bauteilen (15a, 15b) aus ferromagnetischem Material besteht, unter der Wirkung der Kommutierung der durch die Spulen induzierten Flüsse bezüglich der durch die Magnete induzierten Flüsse verschiebt, wobei der ortsfeste Teil ausgehend von zwei Rahmen, in denen je ein Paar von parallelen Hohlräumen ausgehöhlt ist, durch die hindurch der Leiterdraht einer Spule aufgewickelt wird, und ausgehend von zwei Paaren von Magneten gleicher Abmessungen und entgegengesetzter Polaritäten hergestellt wird, die je einem Rahmen zugeordnet sind, wobei die zwei ferromagnetischen Bauteile des beweglichen Teils so bemessen und zueinander angeordnet sind, dass jedes Bauteil sich zwischen zwei Magneten von zwei parallelen Rahmen verschiebt, die einander gegenüber angeordnet sind, damit der von jedem Magnet erzeugte Magnetfluss durch den benachbarten Magnet des gleichen Rahmens von entgegengesetzter Polarität geht und der gleichen Strecke durch die zwei ferromagnetischen Bauteile folgt wie der Magnetfluss, der von den zwei Spulen in der gleichen oder der entgegengesetzten Richtung erzeugt wird.

2. Lineares Betätigungsglied nach Anspruch 1, **dadurch gekennzeichnet, dass** der ortsfeste Teil ausgehend von zwei parallelepipedischen Rahmen (11), in denen je zwei parallele Hohlräume (13) ausgehöhlt sind, durch die hindurch eine Spule (10) aufgewickelt wird, und ausgehend von:zwei.:Paaren von Magneten (12ₐ, 12_{b}) gleicher Breite gleich der Hälfte der Länge eines Rahmens und von entgegengesetzter Polarität nebeneinander und einander gegenüber hergestellt wird.

3. Lineares Betätigungsglied nach Anspruch 1, **dadurch gekennzeichnet, dass** der ortsfeste Teil ausgehend von zwei parallelepipedischen Rahmen (31), in denen je zwei Paare von parallelen Hohlräumen (33ₐ und 33_{b}) ausgehöhlt sind, durch jedes von denen hindurch eine Spule (30) aufgewickelt wird, wobei die in den zwei Spulen des gleichen Rahmens fließenden Ströme entgegengesetzte Richtung haben, und ausgehend von zwei. Paaren von Magneten (32ₐ, 32_{b}) gleicher Länge und entgegengesetzter Polaritäten hergestellt wird, die je zwischen zwei Hohlräumen einer Spule angeordnet sind.

4. Lineares Betätigungsglied nach Anspruch 1, **dadurch gekennzeichnet, dass** der ortfeste Teil ausgehend von einem hohlen zylindrischen Metallrahmen (21), in dem mindestens zwei kreisförmige, parallele Hohlräume (23ₐ, 23_{b}) gleichen Durchmessers ausgehöhlt sind, in jedem von denen eine Magnetspule (20) hergestellt ist, und ausgehend von mindestens zwei kreisförmigen Magneten (22ₐ, 22_{b}) entgegengesetzter Polaritäten und von gleichem Durchmesser hergestellt wird, die sich auf der Innenwand des Rahmens nebeneinander befinden, in deren Mitte sich der bewegliche Teil verschiebt, dessen zwei Bauteile (25ₐ, 25_{b}) zylindrischer Form und von geringerem Durchmesser als der Innendurchmesser der Magnete eine geringere Länge als die Länge jedes Magneten haben.

5. Lineares Betätigungsglied nach Anspruch 4, **dadurch gekennzeichnet, dass** die Länge jedes ferromagnetischen Bauteils (25ₐ, 25_{b}) des beweglichen Teils gleich der Hälfte der Länge eines Magneten (22ₐ, 22_{b}) ist, entlang dessen es sich verschiebt, wobei die Länge des Magneten gleich der Hälfte derjenigen des Rahmens (21) ist.

6. Lineares Betätigungsglied nach Anspruch 2, **dadurch gekennzeichnet, dass** in den zwei Rahmen (11) je ein Hohlraum (16) parallel zu den zwei Hohlräumen (13ₐ und 13_{b}) und zwischen ihnen angeordnet ausgehöhlt ist, um einen Zwischenraum zu erzeugen, durch den der Magnetfluss nicht geht, dass die Form des Hohlraums (16) und diejenige der zwei Hohlräume (13ₐ und 13_{b}) zum Einsetzen der Spulen einen derartigen Querschnitt' äufweisen, dass der Magnetfluss einerseits um die Leiter herum kanalisiert wird und andererseits durch die vier erzeugen Pole (17) und durch die beweglichen Bauteile aus ferromagnetischem Material geht, und dass die Länge jedes ferromagnetischen Bauteils (15ₐ, 15_{b}) des beweglichen Teils größer ist als diejenige eines Pols (17), durch den der Fluss geht.

7. Lineares Betätigungsglied nach Anspruch 5, **dadurch gekennzeichnet, dass** in den Rahmen (21) ein Hohlraum (26) parallel zu den zwei Hohlräumen (23ₐ, 23_{b}) und zwischen ihnen angeordnet gebohrt ist, um einen Zwischenraum, durch den der Magnetfluss nicht geht, und vier Pole (27) zu erzeugen, durch die er geht, dass die Form der drei Hohlräume (23ₐ, 23_{b}, 26) einen derartigen Querschnitt aufweist, dass der Magnetfluss um die Leiter herum kanalisiert wird und durch die vier Pole (27) sowie durch die beweglichen Bauteile aus ferromagnetischem Material geht, und dass die Länge jedes ferromagnetischen Bauteils (35ₐ, 35_{b}) des beweglichen Teils größer ist als diejenige eines Pols (37), der von der Form der Hohlräume definiert wird.

8. Betriebsverfahren eines linearen Betätigungsglieds mit Direktantrieb nach einem der vorhergehenden Ansprüche, **dadurch gekennzeichnet, dass** es von der Richtung des Stroms in den zwei Spulen gesteuert wird, so dass der bewegliche Teil von einer instabilen Endstellung, die definiert ist, wenn der von den Magneten erzeugte Magnetfluss entgegengesetzt zu dem Magnetfluss ist, der vom in den Leitern erzeugten Strom erzeugt wird, in eine andere, stabile Endstellung gleitet, die definiert ist, wenn der von den Magneten erzeugte. Fluss in der gleichen Richtung ist wie derjenige, der von den Leitern erzeugt wird.
